Europäisches Patentamt

(19) European Patent Office

Office européen des brevets

(11) Publication number: **0 017 452**

**A1**

(12) **EUROPEAN PATENT APPLICATION**

(21) Application number: **80300992.7**

(22) Date of filing: **28.03.80**

(51) Int. Cl.³: **B 29 C 17/03**
**B 29 D 3/02**

(30) Priority: **30.03.79 GB 7911281**
**30.03.79 GB 7911282**

(43) Date of publication of application:
**15.10.80 Bulletin 80/21**

(84) Designated Contracting States:
**DE FR GB IT**

(71) Applicant: **STOREY BROTHERS & COMPANY LIMITED**
**Whitecross**
**Lancaster LA1 4XH(GB)**

(72) Inventor: **Fenton, Sidney Desmond**
**1 Leicester Avenue**
**Garstang Nr. Preston Lancs.(GB)**

(74) Representative: **Wetters, Basil David Peter et al,**
**20 St. Mary's Parsonage**
**Manchester M3 2NL(GB)**

(54) **Method of making a shaped structure.**

㊴ In a method of making a shaped structure from sheet material comprising reinforcing elements such as fibres bonded together by a thermosetting resin, said sheet material is formed into a shaped structure by pneumatic pressure applied to it by a flexible substantially air-impervious film (1), preferably of cast, extruded or calendered thermoplastic material, while it is enclosed between that film and a second flexible film (5). The method is specially applicable to the moulding of carbon-fibre-reinforced sheets (2,3,4) into laminated structures.

FIG. 2

- 1 -

## Method of Making a Shaped Structure

This invention relates to a method of making a shaped structure from sheet material comprising reinforcing elements, particularly but not exclusively fibres, bonded together by a thermosetting resin.

The moulding of resin-bonded fibre-reinforced material that is essentially two-dimensional into a form having three dimensions is at present usually carried out by what is known as 'hand lay-up'. In this procedure, the sheet - for example, polyester resin/glass fibre reinforced mat or epoxy resin impregnated carbon fibre sheet - has first to be cut into suitably shaped pieces to conform to the configuration of the forming mould. This operation is very difficult to repeat accurately, and accordingly important properties of the moulded product, such as modulus and strength, are difficult to obtain consistently.

By the method of the present invention, a much higher degree of reproducibility can be obtained in the properties of products moulded from fibre-reinforced and like sheet material. The method is related to the well known procedure of vacuum forming, whose principles are described in Plastics and Rubber Weekly, 25th February 1972. That method is, however, not ordinarily applicable to the moulding of sheet material which is porous at the operating temperature, as for example carbon-fibre sheet is.

According to the invention, there is provided a method of making a shaped structure from sheet material comprising reinforcing elements bonded together by a thermosetting resin, in which said material is formed into a shaped structure by pneumatic pressure applied to it by a flexible substantially air-impervious film while it is enclosed between that film and a second flexible film.

Of the two flexible films employed in the method of the invention, the first (air-impervious) film is that by which pneumatic pressure is transmitted to the sheet material; the second film lies between the sheet material and the surface of whatever mould the sheet material is to be made to conform to. The two films conveniently form an envelope sealed at its periphery enclosing the sheet material. The second film maybe air-impervious, like the first; or it may be permeable to air, as described later.

The flexible substantially air-impervious film is suitably of thermoplastic material, for example a cast, extruded or calendered film of thermoplastic material; and the second film may likewise be a cast, extruded or calendered film of thermoplastics material.

Preberably, at least two sheets of the sheet material, laid one upon the other, are formed into a shaped laminar structure by said pneumatic pressure. During shaping of the sheet material, the thermosetting resin component of it may require to be softened by heat.

The method is specially valuable in its application to the moulding of sheets of directionally orientated reinforcing fibre, particularly unidirectionally oriented carbon fibre sheet or glass fibre sheet and bi-directionally oriented glass fibre sheet (such as sheet made from woven glass roving). Thus, by assembling sheets of unidirectionally oriented fibre one upon the other so that the fibres in one sheet are inclined to those in the other, and moulding the sheets thus assembled there can be obtained a laminate in which strength and other mechanical properties are more isotropic i.e. less dependent on direction. Generally with sheets incorporating unidirectionally oriented fibre, it is preferred that the assembly subjected to moulding should have the fibres in angularly adjacent sheets inclined to one another at an angle of 180°/n, where n is the number of sheets employed. Thus, with only two sheets, the sheets are preferably arranged so that the fibres in one sheet are perpendicular to those in the other; while with three sheets, the preferred arrangement has the fibres in the centre sheet making angles of plus 60° and minus 60° with the fibres in the upper and lower sheets respectively.

The invention is applicable generally to the moulding of reinforced sheets having a matrix of thermosetting resin, such as epoxy, polyester and polyimide thermosetting resins.

In carrying out the method of the invention, heat wil usually be required in order to soften the thermosetting resin which constitutes the matrix of the sheet material. This will usually require raising the temperature of the system to the range 120° - 160°C. It will often be convenient additionally to initiate curing of the resin by pre-heating the mould to an appropriate

- 4 -

temperature; alternatively, the shaped sheet material can be heat hardened in a separate heated mould.

One convenient form of flexible film for use in the method of invention can be obtained by the procedure described in our British Patent Specification No.1,232,381; that is, by coating a plasticised paste of of polymer such as polyvinyl chloride or a co-polymer of vinyl chloride onto casting paper or other suitable support material having a silicone or like release coating, passing the coated support material through a heating stove to fuse the paste into a homogeneous mass, and cooling the product.

Another convenient form of flexible film for use in the method of the invention is the calendered polyvinyl chloride film available under the Trade Mark Velbex. During the period for which, in the method of the invention, such films are required to transmit atmospheric or near-atmospheric pressure to sheet material being moulded practically no air passes through them.

The invention is also applicable to the moulding of sheet material whose reinforcing elements are non-fibrous, for example platelets, as of medium flake mica passing BS mesh 7 (2,800 $\mu m$) with 90% retained on BS mesh 60 (250 $\mu m$). The invention is further illustrated with reference to the accompanying drawings, in which:

Fig.1.    is a plan of an envelope of two films enclosing an assembly of sheets to be moulded;

Fig.2.      is a cross section of the
            envelope-with-assembly shown in Fig.1;

Figs.3, 4   are diagrammatic representations of moulding
and 5       apparatus in use in the method of the
            invention.

The following procedure can be followed to mould a
part-spherical laminate from three sheets of
unidirectional carbon fibre impregnated with epoxy
resin, such as sheet 0.15mm thick composed of 60% by
weight fibre (diameter $9\mu m$) and 40% resin.

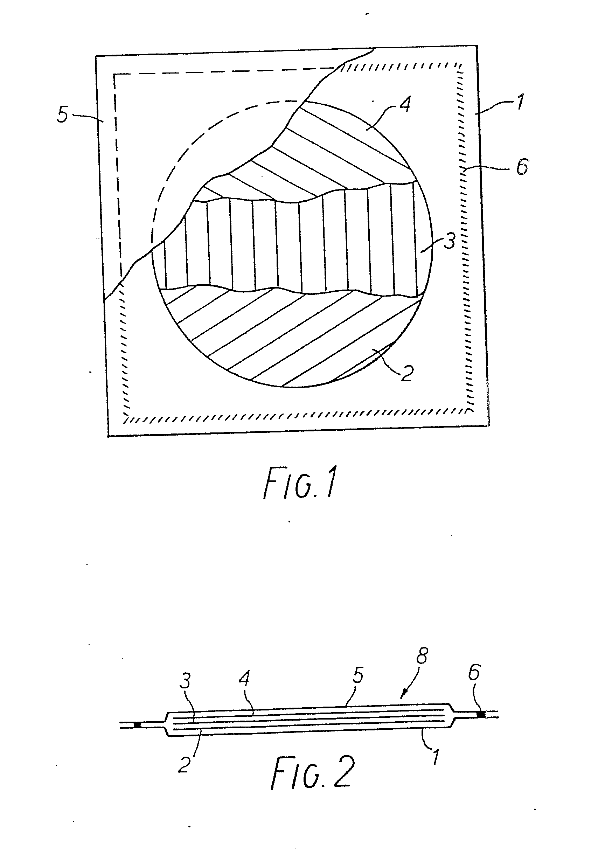

A flexible air-imprevious cast film 1 of polyvinyl
chloride (thickness suitably 2mm) is laid flat on a firm
surface, and onto it is laid a first sheet 2 of the
carbon fibre.  Onto that sheet there are in turn laid
identical sheets 3 and 4 so that the fibres in the
centre sheet 3 make angles of +60° and -60° respectively
with the fibres in sheets 2 and 4.  A second film 5 of
polyvinyl chloride identical with film 1 is then
superimposed on the three-tier assembly of carbon fibre
sheets, and the whole is then treated to seal the
periphery as indicated by the dotted line 6 in Fig.1, so
that an envelope 8 enclosing the assembly is formed (see
Fig.2).

The envelope 8 is then exhausted of air for example by a
fine needle hypodermic syringe, and the hole pierced by
the needle is closed by application of a quick-setting
solution of vinyl chloride copolymer.

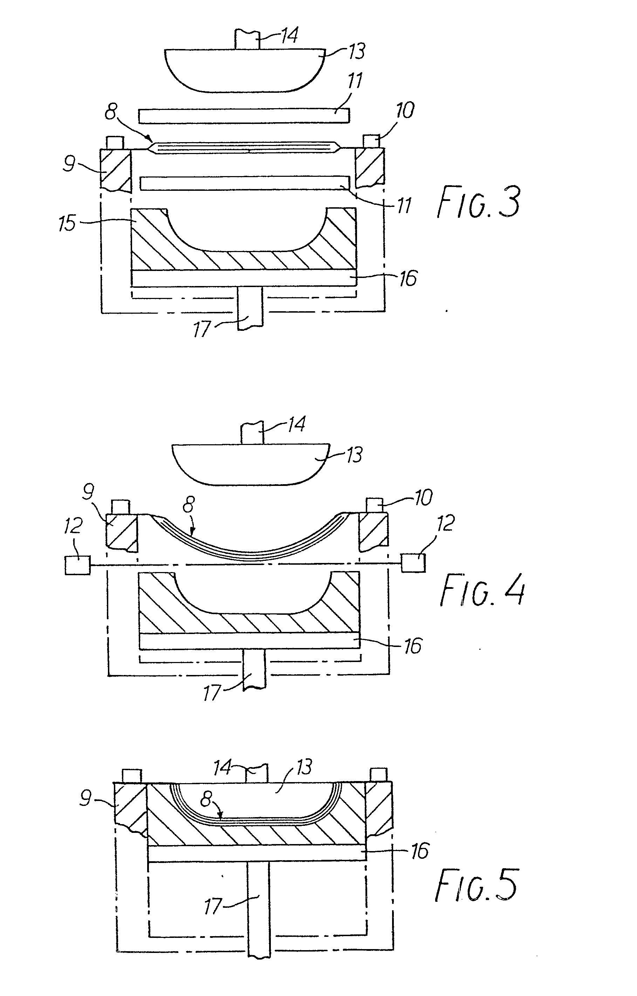

The envelope 8 with the sheet assembly sealed in it is
then clamped by clamps 10 (see Fig.3) onto the upper
frame 9 of a conventional vacuum forming machine
equipped with heaters 11, control circuit incorporating photo-electric cells 12, pre-shaping plug 13 operable by means 14, and mould 15 integral with reciprocable table 16 mounted on rod 17.

The envelope 8 with its enclosed assembly of carbon fibre sheets is heated to a temperature at which the resin bonding the carbon fibres becomes softened. The heaters are then retracted, and a reduced pressure is (by means not shown) applied to the interior of the apparatus to form the envelope and contents into a 'reverse bubble' (Fig.4) whose depth is determined by the position in which the photo-electric cells 12 (which at this stage control the pressure within the apparatus) have been set. With the bubble fully formed, the pre-shaping plug 13 is advanced into it, and the mould 15 is raised to receive the envelope which the plug has thus generally shaped out. With the mould in its highest position (Fig.5), vacuum is applied to the interior of the apparatus (by means not shown), and air is thus drawn from the gap between the envelope (enclosing a now pre-shaped laminate) and the mould surfaces. When the pre-shaping plug is raised, the film 5 forming the upper closure of the envelope becomes subjected to atmospheric pressure over its entire surface, and this pressure is transmitted to the laminate within the envelope, so that the laminate is made to conform fully with the mould surfaces.

The resin bonding the fibres in the laminate can then be fully hardened by transferring the envelope from the mould of the vacuum forming apparatus to a holding mould of identical shape, which is heated to an appropriate temperature, for example 150°C. The envelope is held there under applied pneumatic pressure until the resin is fully cured.

Finally, the envelope with contents is cooled, and the envelope is slit open, and the moulded laminate is removed from it.

According to an alternative feature already indicated, the lower or second flexible film of the two films between which the sheet material is compressed is made air-permeable, as by being microporous or mechanically perforated, to facilitate removal of air during the moulding step. This modification has the advantage of not requiring the use of a syringe or like exhaustion means as a preliminary to moulding.

- 1 -

0017452

CLAIMS:

1. A method of making a shaped structure from sheet material comprising reinforcing elements bonded together by a thermosetting resin, in which said material is formed into a shaped structure by pneumatic pressure applied to it by a flexible substantially air-impervious film while it is enclosed between that film and a second flexible film.

2. A method according to claim 1, in which at least two sheets of said material, laid one upon the other, are formed into a shaped laminar structure by said pneumatic pressure.

3. A method according to claim 1 or 2, in which said sheet material is of directionally oriented reinforcing fibres.

4. A method according to claim 1, in which at least two sheets of directionally oriented reinforcing fibres are laid one upon the other so that the fibres in one sheet are inclined to those in the other, and said sheets are formed into a shaped laminar structure by said pneumatic pressure.

5. A method according to claim 4, in which the fibres in adjacent sheets are inclined to one another at an angle of $180°/n$, where n is the number of sheets employed.

6. A method according any one of claims 1 to 5, in which the two films enclosing the sheet material form an envelope sealed at its periphery.

0017452

7. A method according to any one of claims 1 to 6, in which during shaping the thermosetting resin component of said sheet material is softened by heat.

8. A method according to any one of claims 1 to 7, in which said second film is substantially air-impervious.

9. A method according to any one of claims 1 to 7, in which said second film is permeable to air.

10. A method according to any one of claims 1 to 9, wherein said flexible substantially air-impervious film is a cast film of thermoplastic material.

11. A method according to any one of claims 1 to 9, wherein said flexible substanitally air-impervious film is an extruded film of thermoplastic material.

12. A method according to any one of claims 1 to 9, wherein said flexible substantially air-impervious film is a calendered film of thermoplastic material.

13. A method according to any one of claims 1 to 12, applied to the shaping of sheet material in which the reinforcing elements are carbon fibres.

14. A method according to any one of claims 1 to 12, applied to the shaping of sheet material in which the reinforcing elements are glass fibres.

0017452

15. A method according to any preceding claim, in which the thermosetting resin component of the sheet material is an epoxy, polyester or polyimide resin.

16. A method of making a shaped structure from sheet material comprising reinforcing elements bonded together by a thermosetting resin, substantially as described with reference to the Example herein.

0017452

*FIG.1*

*FIG.2*

FIG.3

FIG.4

FIG.5

0017452

| European Patent Office | EUROPEAN SEARCH REPORT | Application number |
|---|---|---|
| | | EP 80 30 0992.7 |

## DOCUMENTS CONSIDERED TO BE RELEVANT

| Category | Citation of document with indication, where appropriate, of relevant passages | Relevant to claim |
|---|---|---|
| | GB - A - 895 339 (DEUTSCHE TAFELGLAS) <br> * page 1, lines 70 to 86; page 2, lines 18 to 24; page 3, lines 32 to 42; fig. 5 * | 1,8, 14,15 |
| | FR - A - 2 005 213 (COURTAULDS LTD.) <br> * page 1, line 28 to page 3, line 15 * | 2-4 |
| | US - A - 3 042 574 (DU PONT DE NEMOURS) <br> * claim 3; fig. 2 * | 6 |
| | GB - A - 1 456 492 (J. SANSON) <br> * page 3, line 92 to page 4, line 10; fig. 4 <br> & FR - A1 - 2 270 072 <br> & DE - A1 - 2 511 811 | 9 |
| | FR - A1 - 2 235 781 (L.R. BIGNON) <br> * page 3, lines 10 to 30; fig. * | 9 |
| A | DE - U - 7 038 566 (G. GEISS) <br> * complete document * | |
| A | DE - A1 - 2 606 324 (S. HENSCHKE) <br> * claim 1; fig. 1 * | |

### CLASSIFICATION OF THE APPLICATION (Int. Cl.3)

B 29 C 17/03
B 29 D 3/02

### TECHNICAL FIELDS SEARCHED (Int.Cl.3)

B 29 C 17/03
B 29 D 3/02
B 32 B 5/12

### CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 04-07-1980 | BRUCK |

EPO Form 1503.1 06.78